# EUROPÄISCHE PATENTSCHRIFT

(11) **EP 0 602 405 B1**
(45) Veröffentlichungstag und Bekanntmachung des Hinweises auf die Patenterteilung: **13.09.1995**
(21) Anmeldenummer: 93118608.4
(22) Anmeldetag: 18.11.1993
(51) Int. Cl.: B62D 25/20

(54) **Verschlussdeckel**
Closure cap
Bouchon

(30) Priorität: 14.12.1992 DE 4242154
(43) Veröffentlichungstag der Anmeldung: 22.06.1994
(73) Patentinhaber: TRW United-Carr GmbH & Co. KG, D-67677 Enkenbach-Alsenborn (DE)
(72) Erfinder: Kraus, Willibald, D-67269 Grünstadt (DE)
(74) Vertreter: Schieschke, Klaus, Dipl.-Ing.

(56) Entgegenhaltungen:
- EP-A- 0 234 032
- US-A- 5 037 326

## Beschreibung

Die Erfindung bezieht sich auf einen Verschlußdeckel aus Kunststoff, insbesondere zum Verschließen eines Kragenlochs in einer Kraftfahrzeug-Karosserie mit einem napfförmigen Teil, bestehend aus einem Boden und einer zylindermantelförmigen Wand, deren Außenfläche mit Eingriffselementen versehen ist.

Als Stand der Technik ist bereits ein derartiger Verschlußdeckel bekannt (DE 34 46 151 C2), welcher so ausgebildet ist, daß ein umlaufender Rastring als Eingriffselement dient. Weitere bekannte Verschlußdeckel weisen Ringschulterabschnitte, einzelne Haltekrallen und geschlitzte Wandbereiche auf (DE-AS 1 555 007, DE-GM 69 33 117, FR-PS 1 216 812, DE-GM 19 59 426, DE-OS 15 25 790, DE 38 17 896 C2, DE 35 12 582 A1).

Weiterer Stand der Technik ist eine Lampenfassung aus Kunststoff (US-A-5 037 326). Diese Lampenfassung ist so beschaffen, daß einer Dichtlippe gegenüberliegend dicke schräg verlaufende Flügel am Außenumfang einer Wandung angeordnet sind. Diese Flügel dienen dazu, beim Einsetzen der Lampenfassung in eine Öffnung eines Trägers diese zunächst zu zentrieren. Im eingebauten Zustand liegen die Flügel hinter der Öffnung des Trägers, wobei die Vorspannung zur Halterung der Lampenfassung durch die Dichtlippe hergestellt wird.

Aufgabe der vorliegenden Erfindung ist es demgegenüber, einen Verschlußdeckel der eingangs genannten Art so zu verbessern, daß er insbesondere zur Abdichtung eines Kragenloches geeignet ist, neben einer guten Dichtwirkung eine zuverlässige Halterungsmöglichkeit bietet und einen hohen Toleranzausgleich gewährleistet.

Diese Aufgabe wird erfindungsgemäß dadurch gelöst, daß die Eingriffselemente als schräg angeordnete Flügel ausgebildet sind, welche zumindest über einen Teilbereich im spitzen Winkel zu Radiallinien der zylindermantelförmigen Wand verlaufen und daß jeder Flügel dreieckförmig ausgebildet ist, wobei eine Dreieckseite als innerer Endbereich mit der Außenfläche der zylindermantelförmigen Wand verbunden ist, die gegenüberliegende Dreieckspitze den äußeren Endbereich bildet und sich ein Teil der Flügel am Innenumfang des Kragenloches und ein Teil hinter dessen äußerer Kante einlagert.

In weiterer Ausgestaltung der Erfindung kann der äußere Endbereich eines Flügels in derselben Radialebene der zylindermantelförmigen Wand liegen wie der innere Endbereich eines vorgeordneten Flügels, so daß sich die einzelnen schräg verlaufenden, elastischen Flügel weitgehend überdecken.

Nach einem anderen Merkmal der Erfindung kann jeder Flügel jeweils eine Innenfläche und eine Außenfläche aufweisen, welche konisch zueinander verlaufen. Hierbei kann der größte Abstand der Innen- und Außenfläche voneinander im inneren Endbereich des Flügels sein.

Es besteht auch die Möglichkeit, daß die Innen- und Außenflächen der Flügel eben ausgebildet sind. Alternativ können die Innen- und Außenflächen gewölbt gestaltet sein.

Weiterhin können die Flügel über den gesamten Außenumfang der zylindermantelförmigen Wand in einer Richtung schräg angeordnet sein. Es besteht jedoch auch die Variante, daß jeweils zwei Flügel zueinander geneigt sind oder daß jeweils Flügel eines Quadranten der zylindermantelförmigen Wand in anderer Richtung geneigt sind als die Flügel benachbarter Quadranten.

Weiterhin können die Flügel jeweils schalenförmig ausgebildet sein; es besteht auch die Möglichkeit, daß die Außenkontur jedes Flügels als geschwungene Linie mit flachem Anstieg und steilem Abschluß ausgebildet ist, wobei der steile Abschluß der Unterseite des Bodens zugekehrt ist, so daß vorteilhafterweise hierdurch die Dichtwirkung des erfindungsgemäßen Verschlußdeckels verbessert wird. Weiterhin kann die Außenkontur jedes Flügels S-förmig ausgebildet sein.

Die Erfindung wird nachfolgend anhand von in der Zeichnung dargestellten Ausführungsbeispielen näher beschrieben. In der Zeichnung zeigen:
- Fig. 1: eine Seitenansicht eines erfindungsgemäßen Verschlußdeckels;
- Fig. 2: eine Unteransicht auf den Verschlußdeckel nach Fig. 1;
- Fig. 3: eine perspektivische Ansicht des Verschlußdeckels nach Fig. 1 und 2;
- Fig. 4 bis 7: verschiedene Ausführungsformen des Verschlußdeckels jeweils in Unteransicht;
- Fig. 8 und 9: zwei Ausgestaltungsmöglichkeiten der geschwungenen Außenkontur von Flügeln, teils gebrochen;
- Fig. 10: einen Schnitt durch einen Träger mit Kragenloch.
- Fig. 11: eine weitere Ausführungsform des Verschlußdeckels, teils im Schnitt;
- Fig. 12 und 13: zwei verschiedene Einbaumöglichkeiten;

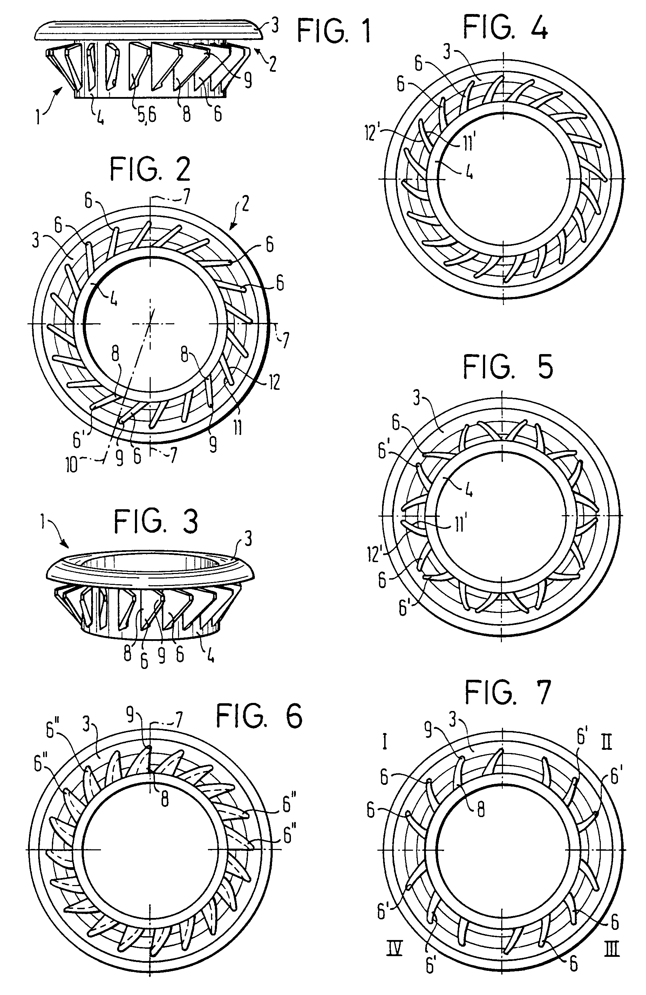

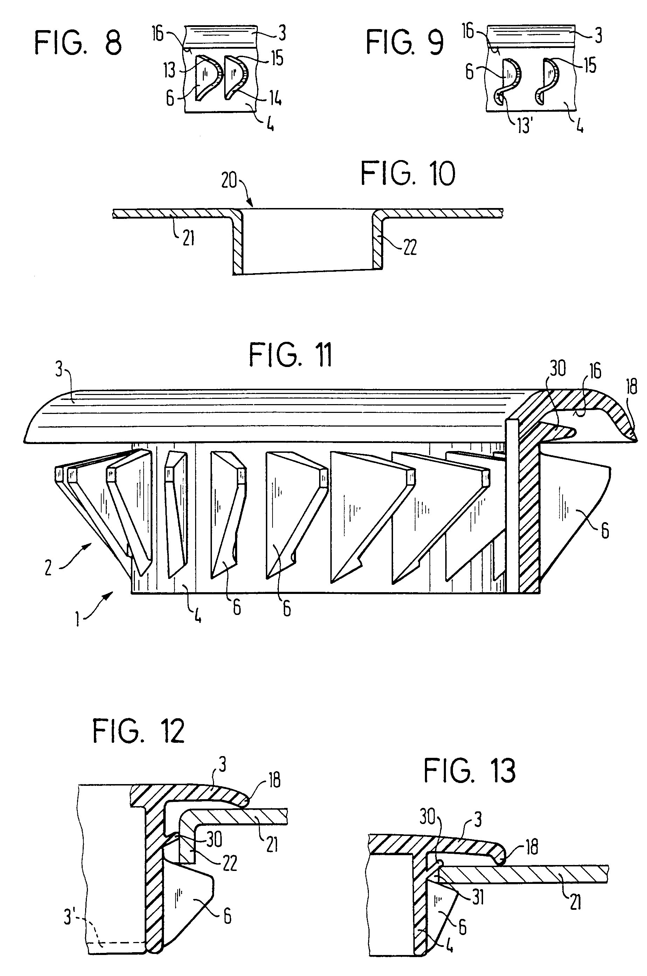

In den Figuren 1 bis 3 ist ein Verschlußdeckel 1 dargestellt, welcher aus Kunststoff besteht und insbesondere zum Verschließen eines Kragenloches 20 dient; dieses ist gemäß Fig. 10 in einen Träger 21 eingearbeitet und besitzt einen umlaufenden Flansch 22. Dieser umlaufende Flansch 22 weist innerhalb zulässiger Toleranzbereiche unterschiedliche Höhen auf, so daß der erfindungsgemäße Verschlußdeckel 1 entsprechend gestaltet sein muß, um diese unterschiedlichen Höhen auszugleichen.

Der Verschlußdeckel besteht aus einem napfförmigen Teil 2, welcher einen Boden 3 und eine zylindermantelförmige Wand 4 aufweist. An der Außenfläche der zylindermantelförmigen Wand 4 befinden sich Eingriffselemente 5.

Aus Fig. 1 bis 3 ist erkennbar, daß die Eingriffselemente 5 als schräg angeordnete Flügel 6 ausgebildet sind, welche gemäß Fig. 2 im spitzen Winkel zu Radiallinien 7 der zylindermantelförmigen Wand 4 verlaufen.

Aus Fig. 1 und 3 geht weiterhin hervor, daß jeder Flügel 6 dreieckförmig gestaltet ist, wobei eine Dreiecksseite als innerer Endbereich 8 mit der Außenfläche der zylindermantelförmigen Wand 4 verbunden ist und die gegenüberliegende Dreieckspitze den äußeren Endbereich 9 bildet. Um eine möglichst gute Haltewirkung des erfindungsgemäßen Verschlußdeckels 1 in dem Kragenloch 20 zu gewährleisten, können eine große Anzahl von schräg angeordneten Flügeln 6 an der Außenfläche der zylindermantelförmigen Wand 4 vorgesehen sein. Hierbei kann der äußere Endbereich 9 eines Flügels 6 gemäß Fig. 2 in derselben Radialebene 10 der zylindermantelförmigen Fläche 4 liegen wie der innere Endbereich eines vorgeordneten Flügels 6'.

In Fig. 2 ist erkennbar, daß jeder Flügel 6 bzw. 6' jeweils eine Innenfläche 11 und eine Außenfläche 12 aufweist, welche zueinander konisch verlaufen. Hierbei ist der größte Abstand der Innen- und Außenfläche 11, 12 voneinander im inneren Endbereich 8, so daß die einzelnen Flügel insgesamt stabil, jedoch sehr gut elastisch sind. Die Innen- und Außenflächen 11, 12 sind eben ausgebildet.

Bei der Ausführungsform nach Fig. 4 finden wiederum eine Anzahl von Flügeln 6 Anwendung, deren Innen- und Außenflächen 11' und 12' jedoch gewölbt ausgebildet sind. Wiederum ist die Konstruktion so beschaffen, daß der äußere Endbereich eines Flügels in derselben Radialebene der zylindermantelförmigen Wand 4 liegt, wie der innere Endbereich eines vorgeordneten Flügels.

Bei den Ausführungsformen nach Fig. 1 bis 4 sind die Flügel über den ganzen Außenumfang der zylindermantelförmigen Wand 4 in einer Richtung schräg angeordnet. Gemäß der in Fig. 5 dargestellten Ausführungsform sind jeweils zwei Flügel 6, 6' zueinander geneigt, so daß sich eine Art sternförmige Anordnung am Außenumfang der zylindermantelförmigen Wand 4 ergibt. Die einzelnen Flügel weisen wiederum konisch zueinander verlaufende, gewölbte Innen- und Außenflächen auf.

Bei der Ausführungsform nach Fig. 6 sind die Flügel 6'' jeweils schalenförmig ausgebildet, so daß sich insgesamt eine Art Schaufelform ergibt. Wiederum sind die Außenflächen und die Innenflächen der Flügel 6'' gewölbt; die Flügel 6'' sind jeweils in einer Richtung geneigt.

Gemäß Ausführungsform nach Fig. 7 sind jeweils Flügel 6 eines Quadranten I, II, III, IV der zylindermantelförmigen Wand 4 in anderer Richtung geneigt als die Flügel 6' benachbarter Quadranten. Statt dieser Quadrantenaufteilung besteht auch die nicht näher dargestellte Möglichkeit, den Außenumfang der zylindermantelförmigen Wand 4 in andere Abschnitte zu unterteilen und hierbei jeweils in anderer Weise geneigte Flügel 6 bzw. 6' vorzusehen oder die Bauformen nach Fig. 6 und 7 zu kombinieren, d.h. entsprechend dem Quadranten die Neigung der schalenförmigen Flügel 6'' zu verändern.

Während bei den Ausführungsformen nach Fig. 1 bis 7 die einzelnen Flügel entweder schaufelförmig oder dreieckförmig ausgebildet sind, können nach Fig. 8 die Flügel 6 so beschaffen sein, daß die Außenkontur 13 jedes Flügels als geschwungene Linie mit flachem Anstieg 14 und steilem Abschluß 15 gestaltet ist. Hierbei ist der steile Abschluß 15 vorteilhafterweise der Unterseite 16 des Bodens 3 zugekehrt. Diese Unterseite 16 des Bodens 3 kann mit einer an sich bekannten Dichtlippe 18 versehen sein, welche die in Fig. 10 dargestellte Oberseite des Trägers 21 beaufschlagt, so daß eine zusätzliche Dichtwirkung erzielt wird.

Nach Fig. 9 besteht auch die Möglichkeit, daß die Außenkontur 13' jedes Flügels 6 S-förmig ausgebildet ist, wobei wiederum der steile Abschluß 15 der Unterseite des Bodens 3 zugekehrt ist.

Insgesamt wird durch die vorliegende Erfindung ein Verschlußdeckel 1 aus Kunststoff geschaffen, welcher insbesondere zum Verschließen eines Kragenloches 20 in einer Kraftfahrzeugkarosserie geeignet ist.

Gemäß Fig. 11 besteht auch die Möglichkeit, daß sich zwischen der Unterseite 16 des Bodens 3 und den Flügeln 6 eine umlaufende Dichtlippe 30 befindet. Diese Dichtlippe 30 ist beispielsweise im Querschnitt dreieckförmig ausgebildet und am Außenumfang der zylinderförmigen Wand 4 angeordnet.

Wird gemäß Fig. 12 der Verschlußdeckel in ein Kragenloch 20 mit einem umlaufenden Flansch 22 eingesetzt, so legt sich die Dichtlippe 30 an den Innenumfang des Flansches 22 und bewirkt damit zusammen mit der Dichtlippe 18 eine sehr gute Dichtwirkung.

Wie vorstehend ausgeführt, ist die Erfindung nicht nur auf den Einsatz des Verschlußdeckels 1 in ein Kragenloch 20 beschränkt; nach Fig. 13 besteht auch die Möglichkeit, den erfindungsgemäßen Verschlußdeckel 1 in eine Bohrung 31 eines Trägers 21 einzusetzen. Hier ist ersichtlich, daß sich die Dichtlippe 30 an die oberen Kante der Bohrung 31 anlegt und wiederum in Zusammenwirken mit der Dichtlippe 18 des Bodens 3 eine sehr gute Dichtwirkung ergibt. Außerdem bewirkt diese Dichtlippe 30 auch eine gute Zentrierung in der Bohrung 31 bzw. dem Kragenloch 20.

Die Dichtlippe 30 braucht nicht im Querschnitt dreieckige Form zu besitzen; es bestehen auch die nicht näher dargestellten Möglichkeiten, beispielsweise die Dichtlippe in Bogenform auszubilden oder an der Unterseite 16 des Bodens 3 anzubringen, wobei sich in diesem Fall die Dichtlippe nach unten in die entsprechende Öffnung, d.h. das Kragenloch 20 oder die Bohrung 31 erstrecken kann. Der Boden 3 kann auch an der gegenüberliegenden Seite des Verschlußdeckels 1 liegen; die Dichtlippen 18 und 30 verbleiben an derselben Stelle (s. Fig. 12, den gestrichtelt dargestellten Boden 3').

Infolge der besonderen Gestaltung der Eingriffselemente als schräg angeordnete Flügel 6 bzw. 6' bzw. 6'' ergibt sich neben einer sehr guten Halterung eine wesentlich verbesserte Abdichtung, wobei außerdem ein guter Toleranzausgleich auch dann erzielt wird, wenn die umlaufende Fläche 22 des Kragenlochs 20 einen unterschiedlich hohen Versatz aufweist.

## Patentansprüche

1. Verschlußdeckel aus Kunststoff zum Verschließen eines Kragenlochs (20) in einer Kraftfahrzeugkarosserie, mit einem napfförmigen Teil (2) bestehend aus einem Boden (3) und einem zylindermantelförmigen Mantel (4), deren Außenfläche mit Eingriffselementen (5) versehen ist,
dadurch gekennzeichnet,
daß die Eingriffselemente (5) als schräg angeordnete Flügel (6) ausgebildet sind, welche zumindest über einen Teilbereich im spitzen Winkel zu Radiallinien (7) der zylindermantelförmigen Wand (4) verlaufen und
daß jeder Flügel (3) dreieckförmig ausgebildet ist, wobei eine Dreieckseite als innerer Endbereich (8) mit der Außenfläche der zylindermantelförmigen Wand (4) verbunden ist, die gegenüberliegende Dreieckspitze den äußeren Endbereich (9) bildet und sich ein Teil der Flügel (6) am Innenumfang des Kragenlochs (20) und ein Teil hinter dessen äußerer Kante einlagert.

2. Deckel nach Anspruch 1,
dadurch gekennzeichnet,
daß der äußere Endbereich (9) eines Flügels (6) in derselben Radialebene (10) der zylindermantelförmigen Wand (4) liegt wie der innere Endbereich eines vorgeordneten Flügels (6').

3. Deckel nach Ansprüche, 1 oder 2
dadurch gekennzeichnet,
daß jeder Flügel (6, 6') jeweils eine Innenfläche (11) und eine Außenfläche (12) aufweist, welche konisch zueinander verlaufen.

4. Deckel nach Anspruch 3,
dadurch gekennzeichnet,
daß der größte Abstand der Innenfläche (11) zur Außenfläche (12) im inneren Endbereich (8) ist.

5. Deckel nach Anspruch 3 und 4,
dadurch gekennzeichnet,
daß die Innen- und Außenflächen (11, 12) der Flügel (6) eben ausgebildet sind (Fig. 1 bis 3).

6. Deckel nach Anspruch 3 und 4,
dadurch gekennzeichnet,
daß die Innen- und Außenflächen (11', 12') der Flügel (6) gewölbt ausgebildet sind (Fig. 4).

7. Deckel nach einem der vorhergehenden Ansprüche,
dadurch gekennzeichnet,
daß die Flügel (6, 6') über den gesamten Außenumfang der zylindermantelförmigen Wand (4) in einer Richtung schräg angeordnet sind.

8. Deckel nach einem der Ansprüche 1 bis 6,
dadurch gekennzeichnet,
daß jeweils zwei Flügel (6, 6') zueinander geneigt sind (Fig. 5).

9. Deckel nach einem der Ansprüche 1 bis 6,
dadurch gekennzeichnet,
daß jeweils Flügel (6) eines Quadranten (I, II, III, IV) der zylindermantelförmigen Wand (4) in anderer Richtung geneigt sind als die Flügel (6') benachbarter Quadranten (Fig. 6).

10. Deckel nach Anspruch 1,
dadurch gekennzeichnet,
daß die Flügel (6'') jeweils schalenförmig ausgebildet sind (Fig. 7).

11. Deckel nach einem der vorhergehenden Ansprüche,
dadurch gekennzeichnet,
daß die Außenkontur (13) jedes Flügels (6, 6', 6'') als geschwungene Linie ausgebildet ist mit flachem Anstieg (14) und steilem Abschluß (15).

12. Deckel nach Anspruch 1 und 11,
dadurch gekennzeichnet,
daß der steile Abschluß (15) der Unterseite (16) des Bodens (3) zugekehrt ist.

13. Deckel nach Anspruch 1,
dadurch gekennzeichnet,
daß die Außenkontur (13') jedes Flügels (6) S-förmig ausgebildet ist (Fig. 9).

14. Deckel nach einem der vorhergehenden Ansprüche,
dadurch gekennzeichnet,
daß sich zwischen der Unterseite (16) des Bodens (3) und den Flügeln (6) eine umlaufende Dichtlippe (30) befindet.

15. Deckel nach Anspruch 14,
dadurch gekennzeichnet,
daß die Dichtlippe (30) am Außenumfang der zylindermantelförmigen Wand (4) angeordnet ist.

## Claims

1. Closure cap of plastics material for closing a collared hole (20) in a motor vehicle body, comprising a cup-shaped part (2) consisting of an end plate (3) and a cylindrical circumferential wall (4) whose outer surface is provided with engaging elements (5), characterized in that the engaging elements (5) are designed as obliquely arranged fins (6) which at least over a partial region extend at an acute angle to radial lines (7) of the cylindrical circumferential wall (4), and in that each fin (6) has a triangular shape in which one side of the triangle is connected as the inner end region (8) to the outer surface of the cylindrical circumferential wall (4), the opposite apex of the triangle forms the outer end region (9), and a part of the fins (6) engages on the inner circumference of the collared hole (20) and a part engages behind the outer edge of the latter.

2. Cap according to Claim 1, characterized in that the outer end region (9) of a fin (6) lies in the same radial plane (10) of the cylindrical circumferential wall (4) as the inner end region of a preceding fin (6').

3. Cap according to Claim 1 or 2, characterized in that each fin (6, 6') has a respective inner surface (11) and a respective outer surface (12) which extend conically in relation to one another.

4. Cap according to Claim 3, characterized in that the greatest distance between the inner surface (11) and the outer surface (12) is in the inner end region (8).

5. Cap according to Claims 3 and 4, characterized in that the inner and outer surfaces (11, 12) of the fins (6) are plane in shape (Figures 1 to 3).

6. Cap according to Claims 3 and 4, characterized in that the inner and outer surfaces (11', 12') of the fins (6) are curved in shape (Figure 4).

7. Cap according to one of the preceding claims, characterized in that the fins (6, 6') are arranged obliquely in one direction over the entire outer circumference of the cylindrical circumferential wall (4).

8. Cap according to one of Claims 1 to 6, characterized in that each two fins (6, 6') are inclined relative to one another (Figure 5).

9. Cap according to one of Claims 1 to 6, characterized in that in each case fins (6) of a quadrant (I, II, III, IV) of the cylindrical circumferential wall (4) are inclined in a different direction than the fins (6') of neighbouring quadrants (Figure 6).

10. Cap according to Claim 1, characterized in that the fins (6'') are in each case dish-shaped (Figure 7).

11. Cap according to one of the preceding claims, characterized in that the outer contour (13) of each fin (6, 6', 6'') is in the form of a curving line having a flat ascent (14) and a steep termination (15).

12. Cap according to Claims 1 and 11, characterized in that the steep termination (15) is directed towards the underside (16) of the end plate (3).

13. Cap according to Claim 1, characterized in that the outer contour (13') of each fin (6) is S-shaped (Figure 9).

14. Cap according to one of the preceding Claims, characterized in that a circumferential sealing lip (30) is situated between the underside (16) of the end plate (3) and the fins (6).

15. Cap according to Claim 14, characterized in that the sealing lip (30) is arranged on the outer circumference of the cylindrical circumferential wall (4).

## Revendications

1. Bouchon obturateur en matière plastique pour obturer un orifice (20) à collerette, pratiqué dans une carrosserie de véhicule automobile, comportant une partie (2) en forme d'écuelle comprenant un fond (3) et une enveloppe cylindrique (4), dont la face externe est pourvue d'éléments (5) de venue en prise,
caractérisé par le fait
que les éléments (5) de venue en prise sont réalisés sous la forme d'ailettes (6) disposées à l'oblique et s'étendant, au moins sur une région partielle, à angle aigu par rapport à des lignes radiales (7) de la paroi (4) en forme d'enveloppe cylindrique ; et
que chaque ailette (3) est de réalisation triangulaire, un côté du triangle, matérialisant une zone extrême intérieure (8), étant relié à la face externe de la paroi (4) en forme d'enveloppe cylindrique, la pointe opposée du triangle formant la zone extrême extérieure (9), une partie des ailettes (6) se plaquant contre le pourtour intérieur de l'orifice (20) à collerette, et une partie venant se nicher derrière le bord extérieur de ce dernier.

2. Bouchon selon la revendication 1,
caractérisé par le fait
que la zone extrême extérieure (9) d'une ailette (6) se trouve dans le même plan radial (10) de la paroi (4), en forme d'enveloppe cylindrique, que la zone extrême intérieure d'une ailette précédente (6').

3. Bouchon selon les revendications 1 ou 2,
caractérisé par le fait
que chaque ailette (6, 6') comporte, respectivement, une face interne (11) et une face externe (12) qui s'étendent tronconiquement l'une par rapport à l'autre.

4. Bouchon selon la revendication 3,
caractérisé par le fait
que l'espacement maximal de la face interne (11), par rapport à la face externe (12), se situe dans la zone extrême intérieure (8).

5. Bouchon selon les revendications 3 et 4,
caractérisé par le fait
que les faces interne et externe (11, 12) des ailettes (6) sont de réalisation plane (figures 1 à 3).

6. Bouchon selon les revendications 3 et 4,
caractérisé par le fait
que les faces interne et externe (11', 12') des ailettes (6) sont de réalisation bombée (figure 4).

7. Bouchon selon l'une des revendications précédentes,
caractérisé par le fait
que les ailettes (6, 6') sont disposées à l'oblique dans une direction sur tout le pourtour extérieur de la paroi (4) en forme d'enveloppe cylindrique

8. Bouchon selon l'une des revendications 1 à 6,
caractérisé par le fait
que deux ailettes respectives (6, 6') sont inclinées l'une par rapport à l'autre (figure 5).

9. Bouchon selon l'une des revendications 1 à 6,
caractérisé par le fait
que des ailettes respectives (6) d'un quart de cercle (I, II, III, IV) de la paroi (4) en forme d'enveloppe cylindrique sont inclinées dans une direction autre que les ailettes (6') de quarts de cercle voisins (figure 6).

10. Bouchon selon la revendication 1,
caractérisé par le fait
que les ailettes (6'') sont respectivement réalisées en forme de coquilles (figure 7).

11. Bouchon selon l'une des revendications précédentes,
caractérisé par le fait
que le contour extérieur (13) de chaque ailette (6, 6', 6'') est réalisé sous la forme d'une ligne vrillée, présentant un flanc ascendant aplati (14) et une terminaison (15) à pente accentuée.

12. Bouchon selon les revendications 1 et 11,
caractérisé par le fait
que la terminaison (15) à pente accentuée est tournée vers la face inférieure (16) du fond (3).

13. Bouchon selon la revendication 1,
caractérisé par le fait
que le contour extérieur (13') de chaque ailette (6) est réalisé de configuration en S (figure 9).

14. Bouchon selon l'une des revendications précédentes,
caractérisé par le fait
qu'une lèvre périphérique d'étanchement (30) se trouve entre les ailettes (6) et la face inférieure (16) du fond (3).

15. Bouchon selon la revendication 14,
caractérisé par le fait
que la lèvre d'étanchement (30) est disposée sur le pourtour extérieur de la paroi (4) en forme d'enveloppe cylindrique.
